# EUROPÄISCHE PATENTANMELDUNG

(11) **EP 0 857 630 A1**
(43) Veröffentlichungstag der Anmeldung: **12.08.1998**
(21) Anmeldenummer: 97100377.7
(22) Anmeldetag: 10.01.1997
(51) Int. Cl.: B60S 3/04, A47L 1/16

(54) **Eiskratzer mit einer um eine umschriebene Fläche umlaufende Eiskratzkante**

(71) Anmelder: Späth, Georg, 84137 Vilsbiburg (DE)
(72) Erfinder: Späth, Georg, 84137 Vilsbiburg (DE)

(57) **Zusammenfassung**

Der Eiskratzer besteht aus einer umlaufenden Eiskratzkante (2) in verschiedenen umschrieben Flächen, dessen entgegengesetztes Ende als Kuppel (4) ausgebildet ist.

Durch die umlaufende Eiskratzkante, der zylindrischen Form und den innen bestehenden Hohlraum (6) ist eine erhebliche erleichterung des Enteisungsvorganges erreicht.

## Beschreibung

Eiskratzer ueblicher Bauart gesitzen nur ein Eiskratzkante und werden in verschiedenen Formen, Materialen und Farben hergestellt um Eis und Frost von Autoscheiben zu Entfernen.

Der im Schutzanspruch 1-11 angegebenen Erfindung liegt das Problem zugrunde das dass Enteisen von Autoscheiben nur mit hohem Kraftaufwand und viel Zeit moeglich ist.

Dieses Problem wird mit den im Schutzanspruch 1-11 aufgefuehrten Merkmalen geloest.

Durch die umlaufende Eiskratzkante, der zylindrischen Form und den innen bestehenden Hohlraum wird eine Erleichterung beim Enteisungsvorgang erreicht, da erst der vordere Querschnitt und danach der hintere Quer-Schnitt des Eiskratzers im Einsatz ist und somit eine Doppelwirkung entsteht.
Die Kuppel ist so gefertigt das der gesamte Eiskratzer gut in der Hand liegt. Dieses bewirkt das wenig Kraftaufwand beim Enteisungsvorgang noetig ist.

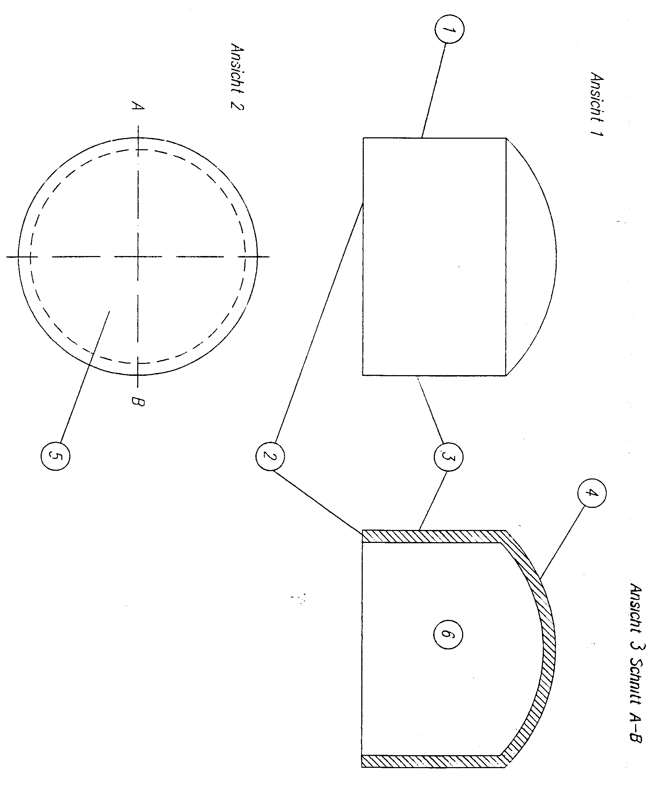

Die Enteisung von Autoscheiben wurde bei verschiedenen Bediengungen durchgefuehrt (z.B. bei Eis, Frost, Reif). Dieses wurde mit einen Eiskratzer desen Form aus der beiliegenden Zeichnung (z. B. zylindrische Form Durchmesser 80mm, Hoehe 60mm, Kuppelradius 120mm und Wandstaerke 4mm) hervorgeht, ausgefuehrt. Dadurch ist mit weniger Kraftaufwand eine schnelle und sauber Enteisung der Autoscheiben erreicht.

## Patentansprüche

1. Eiskratzer mit einer um eine umschriebene Flaeche (5) umlaufende Eiskratzkante (2).

2. Eiskratzer nach Anspruch 1 dadurch gekenntzeichnet, dass die umschriebene Flaeche (5) ein Kreis, eine Ellippse, ein Rechteck oder ein Quadrat ist.

3. Eiskratzer nach A. 1 oder 2, d.g.d, die Eiskratzkante das Ende eines im Querschnitt kreisfoermigen, ellippsenfoermigen, rechteckigen oder quadratischen Zylinder (3) ist.

4. Eiskratzer nach A. 1,2oder3, d.g.d, an dem der Eiskratzkante entgegengesetzten Ende des Eiskratzers ein Griff angebracht ist.

5. Eiskratzer nach A. 3 und 4 d.g.d, der Griff als Kuppel (4) ausgebildet ist.

6. Eiskratzer nach A. 5, d.g.d, die Kuppel eine flache gerundete Form hat.

7. Eiskratzer nach A. 5 oder 6, d.g.d, die Kuppel einstueckig mit dem Zylinder ist.

8. Eiskratzer nach A. 5,6 oder 7, d.g.d, die Kuppel zusammen mit dem Zylinder (1) einen nur durch die umschriebene Flaeche offen, ansonst aber geschlossenen Hohlraum (6) begrenzt.

9. Eiskratzer nach einem der A. 1 bis 8, d.g.d, die Eiskratzkante oder der gesamte Eiskratzer aus Kunststoff besteht.

10. Eiskratzer nach einem A. 3 bis 9, d.g.d, am Zylinder und / oder der Kuppel eine oder mehrere Griffvertiefungen und / oder = Rippen vorgesehen sind.

11. Eiskratzer nach einem der A. 1 bis 10, d.g.d, die Eiskratzkante sich verjuengend oder zugespitzt verlaufend ausgebildet ist.
